Europäisches Patentamt

European Patent Office

Office européen des brevets

(19)

(11) Publication number : **0 610 003 A1**

## (12) EUROPEAN PATENT APPLICATION

(21) Application number : **94300450.7**

(22) Date of filing : **20.01.94**

(51) Int. Cl.⁵ : **G01N 17/00**

(30) Priority : **02.02.93 US 12786**

(43) Date of publication of application :
**10.08.94 Bulletin 94/32**

(84) Designated Contracting States :
**DE ES FR GB IT**

(71) Applicant : **NALCO CHEMICAL COMPANY**
**One Nalco Center**
**Naperville Illinois 60563-1198 (US)**

(72) Inventor : **Sowinski, Michael P.**
**1345 West Sturbridge Drive**
**Hoffman Estates, Illinois 60195 (US)**
Inventor : **Van Camp, James R.**
**125 N. Park Boulevard**
**Glen Ellyn, Illinois 60137 (US)**

(74) Representative : **Harrison, David Christopher**
**et al**
**MEWBURN ELLIS**
**York House**
**23 Kingsway**
**London WC2B 6HP (GB)**

(54) **Method for determining the efficacy of a corrosion protection treatment.**

(57)    A method for determining the adequacy of corrosion protection programs applied to metal surfaces is disclosed. The method provides a rapid qualitative determination of corrosion detection using inexpensive equipment. Generally, the method encompasses :
    a) wetting an absorbent patch capable of retaining a liquid corrosive to a metal surface to be tested with such corrosive liquid to obtain a wetted patch ;
    b) contacting at least a portion of a metal surface to be tested with the wetted patch under corrosive conditions ;
    c) removing the patch from the metal surface ;
    d) comparing the amount of stain present on the surface of the patch with the stain present on the surface of a patch having been applied to a metal surface having been treated with a known effective corrosion prevention treatment and subjected to the same corrosive conditions wherein the efficacy of the corrosion protection treatment can be qualitatively determined.
    Alternatively, the metal surface exposed when the patch is removed can be examined and compared with the metal surface of a material having been properly treated with a corrosion preventive material.

EP 0 610 003 A1

Determination of the efficacy of corrosion prevention treatments applied to metal surfaces is of great importance to industry. The use of metal surfaces which have been improperly treated with corrosion prevention coatings lead to short shelf lives of goods fabricated using these metals. Cans containing foodstuffs which are improperly treated for corrosion protection during the cooking process corrode, and while this condition does not bring into direct question the quality of the foodstuff contained in the can, goods look unappealing and unappetizing resulting in their removal from store shelves and their eventual destruction.

Current corrosion testing means are time-consuming and do not offer a rapid indication of whether or not metal surfaces, including cans, have been properly treated so that they may attain the longest possible shelf life without visible deterioration due to corrosion. Examples of current tests employed to determine the effect of corrosion prevention treatments include the use of corrosion coupons which are exposed to air (or water) for lengthy periods of time and then carefully weighed to determine metal loss. The use of apparatus such as Cleveland humidity cabinets which provide high humidity environments for the exposure of treated metal surfaces over long periods of time, and the exposure of samples of goods being treated to the atmosphere.

All of these treatment methods are time-consuming and, as a result of the time taken, by the time a defect, or improperly treated specimen is determined, the goods so treated have oftentimes been shipped to a customer or further processed.

The present invention provides a test method for rapidly determining the efficacy of a corrosion prevention treatment on a metal surface on a qualitative basis. The test method employed is inexpensive, produces results in time periods ranging from as little as seconds to two hours, can be easily carried out without the use of expensive laboratory equipment, and provides a reproducible means to determine the efficacy of corrosion treatment programs.

The basic method of this invention is set forth in the following four steps:

a) contacting under corrosive conditions at least a portion of a metal surface to be tested with an absorbent patch retaining a liquid corrosive to the metal surface;

b) removing the patch from the metal surface;

c) comparing the amount of stain present on the surface of the patch or of the metal surface with, respectively, the stain present on the surface of a patch having been applied to another metal surface, or with the stain on the other metal surface, the other metal surface having been treated with a known effective corrosion prevention treatment and subjected to the same corrosive conditions wherein the efficacy of the corrosion protection treatment can be qualitatively determined.

Alternatively, both comparisons in step (c) can be carried out.

The corrosion detection patch comprises a patch of cellulosic or other absorbent material adapted to absorb a corrosion causing liquid. This patch is adapted to be placed on a metal surface, maintained in position for a period of time, and then removed so that the metal which has been exposed to the patch or the patch itself can be examined for staining or the like.

## THE METHOD

The metal surfaces to which this invention is applicable include metal surfaces of all commonly available metals encountered in the fabrication of metallic articles. Exemplary metals include steel, tin coated steel, aluminum, and other metals. While the method of this invention is particularly adapted to determine the efficacy corrosion protection treatment applied to tin coated steel cans containing foodstuffs during the can cooking process, the process of this invention should also perform satisfactorily on other metallic surfaces to which a corrosion protection treatment has been applied. Of particular note, and in a preferred embodiment of this invention, the metal surface which is tested involves a weld or seam, such as the weld found on tin coated steel or steel cans.

## THE ABSORBENT PATCH

The absorbent patch capable of retaining a liquid corrosive to the metal surface may be fabricated to a number of different types of materials. Synthetic polymeric superabsorbents, filter paper, absorbent tissue or toweling, cotton, wool or other absorbent materials which are pliable, are capable of retaining a corrosive liquid, and which are stable to the corrosive liquid for the period of time that they remains in contact with the metal surface can be used. If in practicing the embodiment of the test method where it is desirable to examine the patch for corrosion byproducts, light, uniformly colored, preferably white patches are preferred. In a preferred embodiment of this invention, absorbent toweling, tissue or filter paper is employed. Most preferably, a gauze pad such as that found in an ordinary adhesive bandage strip is used. It is not known if the pad beneath the gauze is cellulosic, synthetic superabsorbent polymer or a mixture thereof and such difference of material is not critical for the purpose of this invention. Exemplary adhesive bandage strips containing a gauze or gauze-like material are Curity Curad all-purpose plastic strips which the manufacturer states has a "Telfa-Pad®", a highly absorbent cushion pad which is covered by a soft perforated film. Curity Curad bandages are available from the Kendall-Futuro Division of the Kendall Company, Cincinnati, Ohio. Band-Aid Brand Adhesive Strips available from the Johnson and Johnson corporation are also useful in the practice of this invention.

The absorbent patch material described above must be maintained in contact with the metal surface for the duration of the test period. In fastening the absorbent patch material to the metal surface, we have discovered that it is important that the side of the patch material not contacting the metal surface be open to the atmosphere, and must be allowed to "breathe". Thus, the absorbent patch material may not be totally covered with a impervious tape, and should be covered only with a substance which allows the atmosphere of the container into which the metal article is placed to have direct contact with the absorbent patch material. In a most preferred embodiment of this invention, the absorbent patch material a one-piece adhesive bandage strip where the absorbent material is held in place with an adhesive strip having a breathable gauze center placed over the patch. Commonly available adhesive bandages such as those used for dressing small cuts or abrasions and sold under the tradenames stated above are preferred. This type of strip avoids the problem of separately fastening an absorbent patch and adhesive.

In another embodiment of this invention, an adhesive strip such as those described is used to contact an absorbent paper, preferably an ashless filter paper, to the metal surface. Thus a piece of filter paper may be cut slightly larger than the pad area of the adhesive strip and placed on the strip.

After fastening the absorbent patch to the metal surface to be tested so that the absorbent patch communicates to the metal surface, the absorbent is wet with a liquid corrosive to the metal surface. The corrosive liquid employed may vary considerably depending upon the end use to which the metal article is to be put, the metal used, as well as the particular corrosion prevention treatment applied. Typical liquids which are corrosive to the metal surface useful in this invention contain 50-2,000 ppm of chloride anion and have a pH value ranging from 2-8. It should be noted that while we prefer to use a solution containing chloride anion for the determination of the efficacy of corrosion treatment programs applied to tin cans during the cooking process, aqueous solutions containing other corrosion causing anions including sulphate, nitrate, sulfite, bromide, phosphate, and the like, may be prepared and utilized. Mixtures of anions may also be employed. Cations present in the solution are generally alkali or alkaline earth metal ions. While a pH range from 2-8 is preferred, pH should be determined from the end use metallurgy being evaluated, and the use to which the metal surface being evaluated will be employed. As an example, if a metal surface will be exposed to alkali, it may be beneficial to test at higher pH values and vary the corrosive liquid to contain alkali or alkaline earth metal hydroxides. Due to the nature of the test employed, it is preferred that a solution severely corrosive to the metal surface be prepared so that testing is accelerated. It is important in the testing process that in order to be reproducible, the composition of the solution as well as the volume used per test should be noted so that the test results can be fairly compared.

**CONDITIONS OF THE TEST**

The metal surface not in contact with the wetted patch, having been treated with a liquid corrosive to the metal surface, is now exposed to a high humidity atmosphere and a corrosive temperature for a time sufficient to allow corrosion of improperly treated surfaces to occur. The corrosive temperature may range from 20-100°C and preferably from 25-80°C. A most preferred temperature ranges from 40-80°C. In order to maintain the metal surface having the patch applied thereto in high humidity condition, the article may be sealed in a plastic bag, or the like. While a container consisting of a plastic bag provides a preferred method of carrying out the test method of this invention, other more elaborate equipment, such a incubators, constant temperature drying ovens, and the like, may be employed with success. When using a plastic bag, it is preferred to seal the bag using a rubber band, rope, wire, or the like.

After a period of typically from 10 minutes-2 hours and generally, from 10-30 minutes, the metal surface having the absorbent patch applied thereto is removed from the atmosphere into which it has been placed and the patch is then removed from the metal surface. Examination of the metal surface exposed when the patch is removed or the surface of the patch in contact with the metal surface for the presence of stain or corrosion byproducts gives an immediate, rapid, qualitative determination of the effect of the corrosion detection treatment. By comparing the amount of stain present on the exposed metal surface or the patch to the stain present on an exposed surface of a metal surface which has been similarly treated (or a patch removed from a metal surface similarly treated) and having a known effective corrosion protection program applied, the efficacy of the corrosion protection treatment applied to the metal surface is determined. In order to determine the efficacy of the test method of this invention, the following tests were conducted.

Example 1:

An aqueous corrosion causing solution containing 1500 ppm sodium chloride in distilled water was prepared. Curad plastic strip bandages were obtained and the pad or "Telfa-Pad®" portion of the bandage was wet with a small known volume of the sodium chloride solution. The adhesive bandage was then placed on a tin coated steel can with the patch or pad portion being over the can seam. The can was placed in a plastic bag, the bag sealed, and placed in a 100°F oven for a period of sixty minutes. After sixty minutes the bag was removed from the incubator, opened, the can removed, and the bandage removed from the can. If the metal surface underneath the patch is clean, corrosion protection that had been applied to the can is deemed to be sufficient. If the metal is orange/rust colored, corrosion has taken place and corrosion protection of the can was deemed insufficient. Likewise, if the portion of the patch having been in contact with the metal surface shows no discoloration from metal corrosion products, corrosion protection is deemed adequate. If the portion of the patch which was placed against the metal surface shows discoloration from metal corrosion products (colored metallic oxides and chlorides), corrosion protection is judged insufficient. The patch was applied over the can seam, since this is the weakest portion of the can and during the welding process, the tin is often stripped off leaving mild steel exposed.

The following test data shows the use of the above procedure on cans taken directly from a commercial cannery. Some of the cans that were evaluated were treated with a proprietary multi-functional corrosion inhibitor solution available from Nalco Chemical Company, Naperville, Illinois and sold under the trade name NALCO® 3008 by placing the can in a 1,500 ppm solution of the corrosion inhibitor at 180° for one hour prior to testing. Results of the tests are shown below.

| Exposure Time | Temp. of Incubator | Patch Water | Can Treatment | Result (1) |
|---|---|---|---|---|
| 1.5 hr. | 37°C | 1500 Cl-pH 2.7 | None | Spot |
| 1.5 hr. | Rm. Temp. | 1500 Cl-pH 2.7 | None | Spot |
| 1.5 hr. | Rm. Temp. | 1500 Cl-pH 2.7 | 1500 ppm 3008 | Spot |
| 1.0 hr. | Rm. Temp. | 1500 Cl-pH 2.7 | None | Spot |
| 35 min. | Rm. Temp. | 1500 Cl-pH 6.0 | None | Clean |
| 35 min. | Rm. Temp. | 1500 Cl-pH 6.0 | 1500 ppm 3008 | Clean |
| 1 hr. | Rm. Temp. | 1500 Cl-pH 6.0 | 1500 ppm 3008 | Clean |
| 1 hr. | Rm. Temp. | 1500 Cl-pH 6.0 | None | Spot |
| 30 min. | 37°C | 1500 Cl-pH 6.0 | 1500 ppm 3008 | Clean |
| 30 min. | 37°C | 1500 Cl-pH 6.0 | None | Spot |
| 1 hr. | 37°C | 1500 Cl-pH 6.0 | None | Spot |
| 1 hr. | 37°C | 1500 Cl-pH 6.0 | 1500 ppm 3008 | Clean |
| 1 hr. | 37°C | 1500 Cl-pH 6.0 | 400 ppm 3008 | Spot |
| 1 hr. | 37°C | 1500 Cl-pH 6.0 | None | Clean |
| 1 hr. | 37°C | 1500 Cl-pH 6.0 | 450 ppm 3008 | Clean |
| 1 hr. | 37°C | 1500 Cl-pH 6.0 | 450 ppm 3008 | Clean |

(1) VISUAL OBSERVATION OF THE PATCH

Example 2:

The corrosion patch test, as described above, was used to measure the effect of reducing the concentration of a neutralizing amine being fed to a commercial can cooker in this example. The feed of the commercially available neutralizing amine product to the can cooker was stopped and a commercially available rust preventative, not containing amine, was fed at the same pump rate. pH was monitored and the "patch test" was used to evaluate can protection. At the start of the test, the can cooker water had a pH of 6.6 and cans produced at that time showed no evidence of corrosion using the patch test. Fifteen minutes later, the pH of the can cooker had been lowered to 5.3 and the patch test showed slight spotting. At 1 hr. and 45 min. after the start of the test, the pH of the can cooker had fallen to 4.7 and cans tested showed evident side seam stains. The test was terminated at 1 hr. and 45 min. because of the likelihood of further corrosion. These tests provided a good correlation between results of the patch test and the expected corrosion protection of treated cans.

Example 3:

In yet another testing situation, cans from a commercial cannery were treated to provide extra corrosion protection using a corrosion inhibitor that was sprayed onto the cans immediately after the can cooler and while the cans were still warm from the cooking process. It was estimated that the cans were the temperature of 100°F at the time of treatment. Duplicate tests run in the manner shown above show that the cans were properly treated. A gauze patch exhibited no signs of staining. However, when the corrosive liquid applied to the patch was changed to a dilute solution of sulfuric acid, the patch test showed that seams of the can were severely affected as indicated by substantial stain. This indicates that the corrosion protection was not adequate in the event that the finished product would have been exposed to severe conditions of this type.

As applied to cans, it should be noted that if a can exhibits a spot and it was expected to pass as a result of being treated, the can could have been accidentally damaged during processing. Therefore, the test should be run in duplicate in an effort to eliminate false positive results.

Based upon the above results, it was determined that the patch test of this invention gave a rapid, reproducible, qualitative determination of the efficacy of the corrosion protection treatment applied to cans of foodstuff at commercial canneries.

While the examples directed to this invention deal specifically with cans treated in a can cooker, the test should find equal applicability on other metal surfaces.

## Claims

1. A method of rapidly determining the efficacy of a corrosion protection treatment applied to a metal surface which comprises:

    a) contacting under corrosive conditions at least a portion of a metal surface to be tested with an absorbent patch retaining a liquid corrosive to the metal surface;

    b) removing the patch from the metal surface;

    c) comparing the amount of stain present on the surface of the patch or of the metal surface with, respectively, the stain present on the surface of a patch having been applied to another metal surface, or with the stain on the other metal surface, the other metal surface having been treated with a known effective corrosion prevention treatment and subjected to the same corrosive conditions wherein the efficacy of the corrosion protection treatment can be qualitatively determined.

2. A method according to claim 1 wherein the metal surface to be tested is the exterior of a tin coated steel can.

3. A method according to claim 2 wherein the metal surface is the exterior seam weld of a tin coated steel can.

4. A method according to claim 1, claim 2 or claim 3 wherein the absorbent patch is cellulosic and the patch is retained on the metal surface with an adhesive strip.

5. A method according to claim 1, claim 2 or claim 3 wherein the absorbent patch is an adhesive bandage.

6. A method according to claim 1, claim 2 or claim 3 wherein the absorbent patch is a synthetic superabsorbent, or a cellulosic fibre mat.

7. A method according to any one of the preceding claims wherein the liquid corrosive to the metal surface is an aqueous fluid containing 50-2,000 ppm of chloride anion and has a pH value of from 2-8.

8. A method according to any one of the preceding claims wherein the corrosive conditions are a time period of 10 minutes to 2 hours at a temperature of 20-100°C.

9. A method according to any one of the preceding claims wherein both the comparisons in part (c) are made.

10. A test method according to any one of the preceding claims for determining the efficacy of corrosion protection treatments applied to the exterior of metallic cans containing foodstuffs which comprises in step (a):

    obtaining a cooked metallic can containing a foodstuff which can was treated by a corrosion protection treatment during or after the cooling process and maintaining the exterior surface in contact with the wetted patch at a temperature of 15-100°C for a period of from 5 minutes to 2 hours under high humidity conditions.

11. A patch for determining the effect of an anti-corrosive treatment on a metal surface which comprises a patch of absorbent material wet with a corrosion causing liquid, said patch being adapted to communicate to a metal surface, and means for maintaining such patch in communication to the metal surface.

12. A patch according to claim 11 wherein the patch is adapted to be held in communication to the metal surface with an adhesive strip having a center, such porous center being applied directly over the patch.

13. Use of a patch according to claim 11 or claim 12 in a method according to any one of claims 1 to 10.

EP 0 610 003 A1

**European Patent Office**

# EUROPEAN SEARCH REPORT

Application Number

EP 94 30 0450

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | FR-A-2 218 024 (ALTALANOS GEPTERVEZO IRODA) | 1-3,8-10 | G01N17/00 |
| Y | | 4-7, 11-13 | |
| | * page 1, line 1 - page 3, line 14 * | | |
| | * page 6, line 6 - line 36 * | | |
| | * examples 1-3 * | | |
| | --- | | |
| X | US-A-3 236 599 (R.M. FOWLER ET AL) | 1,8,10 | |
| A | | 4-7, 11-13 | |
| | * the whole document * | | |
| | --- | | |
| Y | GB-A-2 244 810 (SYCOPEL SCIENTIFIC) | 4-6, 11-13 | |
| A | | 1-3 | |
| | * page 6, line 1 - page 7, line 17 * | | |
| | * claims 8,9,12,13; figures 1,2 * | | |
| | --- | | |
| Y | FR-A-2 298 591 (VEREINIGTE METALLWERKE RANSHOF-BERNDORF) | 7 | TECHNICAL FIELDS SEARCHED (Int.Cl.5) |
| A | | 1,10,11 | G01N |
| | * the whole document * | | |
| | ----- | | |

The present search report has been drawn up for all claims

| Place of search | Date of completion of the search | Examiner |
|---|---|---|
| BERLIN | 18 May 1994 | Johnson, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)